# EUROPEAN PATENT SPECIFICATION

(11) **EP 1 040 162 B1**
(45) Date of publication and mention of the grant of the patent: **12.07.2006**
(21) Application number: 98962080.2
(22) Date of filing: 11.12.1998
(51) Int. Cl.: C08L 23/10, C08L 23/16, C08L 23/08

(54) **THERMOPLASTIC POLYMER COMPOSITIONS**
THERMOPLASTISCHE POLYMERZUSAMMENSETZUNGEN
COMPOSITIONS POLYMERES THERMOPLASTIQUES

(30) Priority: 18.12.1997 EP 97203986
(43) Date of publication of application: 04.10.2000
(73) Proprietor: E.I. DU PONT DE NEMOURS AND COMPANY, Wilmington, Delaware 19898 (US)
(72) Inventor: HAUSMANN, Karlheinz, CH-2012 Auvernier (CH)
(74) Representative: Carpmaels & Ransford
(86) International application number: PCT/US1998/026423
(87) International publication number: WO 1999/031177

(56) References cited:
- EP-A- 0 452 010
- DE-A- 19 610 415
- US-A- 5 206 294

## Description

### BACKGROUND OF THE INVENTION

This invention relates to thermoplastic polymer compositions which are thermoformable, and to thermoformed articles made from such compositions.

The compositions of the present invention, which are halogen-free, are useful for making laminates, sheets and films, and for replacing polyvinyl chloride (PVC) resins in many of their traditional uses. In particular, compositions of the present invention, and thermoformed articles made therefrom, are suitable as PVC replacements in the automotive field. They may be used in the fabrication of interior sheathing of automobiles, for example, in the instrument panel skins, door panels, roof liners and seat covers.

Automotive applications require certain properties in the resins, including good flexibility, low temperature properties, capability of providing a soft surface texture and grain retention; as well as good high temperature properties and low emissions associated with it in view of the extreme temperatures the interior of automobiles can reach on hot, sunny days. PVC-free compositions comprising a blend of polypropylene, ethylene copolymer ionomer resin, ethylene/glycidyl acrylate or methacrylate copolymer, and uncrosslinked ethylene propylene rubber are described in U.S. Patent No. 5, 206,294. Such a blend has been proven suitable for most applications and it is characterized by good thermoformability and grain retention. This blend has some drawbacks, however, in applications where thin gauges are required. At gauges around 1 mm and thinner, the low embossing depth may lead to insufficient grain retention; moreover, this blend may be too costly for certain applications.

### SUMMARY OF THE INVENTION

The present invention provides a composition suitable for thermoforming which demonstrates good grain retention at thin gauges, low gloss and whose cost is competitive for many applications. This composition is defined in claim 1.

### DETAILED DESCRIPTION OF THE INVENTION

Where component (a) contains a polypropylene, the polypropylene component consists of crystalline polypropylene and is intended to include in addition to the homopolymer those polymers that also contain minor amounts, usually not greater than 15 wt %, of higher or lower α-olefins, e.g. those containing 3-8 carbon atoms, such as ethylene, butene, octene, etc. The polypropylene polymers useful in this invention have melt indices in the range of from about 0.07-30 g/10min at 230 °C/2.16 kg.

Component (a) is preferably present in the composition of the present invention in amounts of 20-30 wt. %.

The uncrosslinked ethylene/propylene copolymer rubber (component (b)) may be an ethylene/propylene/nonconjugated diene copolymer (EPDM) or an ethylene/propylene copolymer (EPM). EPDMs are preferred as component (b). The uncrosslinked ethylene/propylene copolymer rubber preferably contains 65-75 wt % ethylene.

The nonconjugated dienes can contain from 6-22 carbon atoms having at least one readily polymerizable double bond. The amount of nonconjugated diene is generally from about 1-7 wt. %, usually 2-5 wt. %. EPDM copolymers that are especially preferred are ethylene/propylene/1,4-hexadiene, ethylene/propylene/dicyclopentadiene, ethylene/propylene/norbornene, ethylene/propylene/methylene-2-norbornene and ethylene/propylene/1,4-hexadiene/norbornadiene. It is preferred that the ethylene/propylene copolymer rubber are non-crosslinked. The ethylene/propylene copolymer rubber present as component (a)(ii) in the blend is present in amounts of 15-50 wt. %, preferably 15-40 wt. %.

Component (b) is preferably present in the composition of the present invention in amounts of 10-30 wt. %.

The ionic copolymer of ethylene and an α,β-unsaturated C₃ -C₈ carboxylic acid (component (c)) optionally contains at least one softening comonomer that is copolymerizable with ethylene. Acrylic and methacrylic acids are preferred acid comonomers. The softening comonomer can be an alkyl acrylate selected from the group consisting of n-propyl-, n-butyl, n-octyl, 2-ethylhexyl-, and 2-methoxyethyl-acrytates. The preferred alkyl acrylates are n-butyl-, 2-ethylhexyl-, and 2-methoxyethyl-acrylates. The softening comonomer can also be an alkyl vinyl ether selected from the group consisting of n-butyl, n-hexyl, 2-ethylhexyl-, and 2-methoxyethyl-vinyl ether. The preferred alkyl vinyl ethers are n-butyl vinyl ether and n-hexyl vinyl ether. The coplymer is about 10 to 70% neutralized with metal ions selected from groups Ia, Ib, IIa, IIIa, IVa, VIb, and VIII of the Periodic Table of Elements such as sodium, potassium zinc, calcium, magnesium, lithium, aluminum, nickel, and chrominum. Preferably the copolymer has from about 35 to about 70% of the carboxylic acid groups ionized by neutralization with metal ions selected from the group consisting of sodium, potassium, zinc, calcium, and magnesium. Component (c) is preferably present in the composition of the present invention in amounts of 15-20 wt. %.

The copolymer of ethylene and glycidyl acrylate or ethylene and glycidyl methacrylate (component (d)) preferably contains copolymerized units of an alkyl acrylate or an alkyl methacrylate having 1-6 carbon atoms. The ethylene/glycidyl acrylate or ethylene/-glycidyl methacrylate copolymer contains 60-88 weight percent ethylene and 1-12 weight percent glycidyl acrylate or glycidyl methacrylate. Representative alkyl acrylates and alkyl methacrylates that are used in the copolymer include methyl acrylate, ethyl acrylate, propyl acrylate, n-butyl acrylate, isobutyl acrylate, hexyl acrylate, methyl methacrylate, ethyl methacrylate, propyl methacrylate, butyl methacrylate, and hexyl methacrylate. Ethyl acrylate is preferred and n-butyl acrylate is especially preferred.

The ethylene/glycidyl (meth)acrylate copolymer can be prepared by direct polymerization, for example, copolymerizing ethylene, an alkyl acrylate, and glycidyl methacrylate or glycidyl acrylate in the presence of a free-radical polymerization initiator at elevated temperatures, generally 100°-230° C., and at elevated pressures, i.e. 140-350 MPa. The most preferred ethylene/glycidyl(methacrylate copolymers that are used in this invention are copolymers of ethylene, ethyl acrylate, glycidyl methacrylate, and, especially, ethylene, n-butyl acrylate, and glycidyl methacrylate. Component (d) is preferably present in the composition of the present invention in amounts of 4-6 wt %.

The polyethylene component (component (e)) is preferably a linear low density polyethylene (LLDPE). LLDPE is a class of low density polyethylene characterized by little, if any, long chain branching, in contrast to conventional LDPE, The processes for producing LLDPE are well known in the art and commercial grades of this polyolefin are available. The term LLDPE means copolymers of ethylene and other alpha-olefins such as 1-butene, 1-hexene, and 1-octene. LLDPEs suitable for the present invention preferably have a melt flow index at 190 °C/2.16 kg of less than 1, more preferably less than 0.5. Component (e) is preferably present in the composition of the present invention in amounts of 10-20 wt %.

The ethylene alpha-olefin copolymer elastomer (component (f)) is a copolymer of ethylene with alpha-olefins having 4-8 carbon atoms (cf. US Patent Nos. 5,272,236, 5,278,272; PCT WO 94/06817). Alpha-olefins are 1-pentene, 1-hexene, 4-methyl-1-pentene, and 1-octene, preferably 1-butene, 1-hexen and 1-octene. Component (f) is preferably present in the composition of the present invention in amounts of 15-25 wt %.

The thermoplastic polymer compositions of the present invention are generally prepared by melt blending the polymeric components under high shear conditions, for example in an extruder. The various ingredients may first be combined with one another e.g., in a pellet blend, or they may be combined with one another via simultaneous or separate metering of the various components. They may also be divided and blended in on or more passes into separate sections of the mixing equipment.

The resultant compositions may be thermoformed into a variety of articles, including sheets, or they may be molded into any desired shape. In particular, they may be thermoformed at high deep-draw ratios for use as instrument panel skins for automobiles. In addition, articles may be laminated to a foam prior to thermoforming. These laminates are particularly useful in automotive applications.

Excellent low temperature flexibility and high temperature resistance enables compositions according to the present invention to be useful in applications wherein a wide range of temperature and abrasive conditions are encountered. In addition, as these compositions resist sticking to metal at elevated temperatures, e.g. 150-200 °C, they can be used in processes in which hot polymer comes into pressure contact with hot metal rolls.

The invention can be further understood by the following examples in which parts and percentages are by weight unless otherwise indicated.

### Examples

The compositions are compounded in a 25 mm PRISM twin screw extruder. All ingredients were prepared as a salt and pepper blend and granulated after exiting the extruder. The granulate obtained this way is melted in another extruder where 1mm thick sheets are extruded and are embossed subsequently on an embossing roll. The sheets are then thermoformed over a commercial dashboard form. Grain definition and gloss are compared subjectively.

Components used in the examples are:
1 MOPLEN ® 30CS polypropylene homopolymer - melt flow index 8 g/10 min at 230 °C ASTM D-1238, Condition L, made by Montell
2 HIFAX ® CA12A polypropylene/ethylene copolymer made by Montell
3 NORDEL® 3681 ethylene/propylene/1,4-hexadiene made by DuPont-Dow Elastomers
4 SURLYN® 9520 zinc ionomer made by DuPont
5 ELVALOY® AS ethylene/n-butyl acrylate/glycidyl methacrylate made by DuPont
6 STAMILAN® 2200TC00 polyethylene - MFI = 0.3; DSM 1808 polyethylene - MFI = 8 made by DSM
7 ENGAGE® 8150 ethylene-octene copolymer elastomer made by DuPont-Dow Elastomers

Elvaloy AS and Surlyn are trade names of E.I. du Pont de Nemours for their polymer modifiers and ionomer resins, respectively Stamilin is a tradename of DSM for their polyethylene resins Engage and Nordel are tradenames of DuPont-Dow Elastomers for their ethylene octene copolymers and their EPDM elastomer resins respectively. Hifax is a tradename of Montell for their polypropylene reactor copolymers Moplen is a tradename of Montell for their polypropylene resins

### Amounts are given in weight %

| | Control | 1 | 2 | 3 | 4 | 5 |
|---|---|---|---|---|---|---|
| MOPLEN 30CS | 20 | | | | | 20 |
| HIFAXCA12A | | 30 | 30 | 30 | 30 | 10 |
| NORDEL 3681 | 44 | 20 | | | | |
| ENGAGE 8150 | | 18 | 28 | 28 | 25 | 25 |
| ELVALOY AS | 2 | 2 | 2 | 2 | 6 | 6 |
| SURLYN 9520 | 34 | 20 | 20 | 20 | 20 | 20 |
| DSM 1808 | | 10 | 20 | | | |
| STAMILAN 2200TC00 | | | | 20 | 19 | 19 |

### Results

| | | | | | | |
|---|---|---|---|---|---|---|
| MFI | 0.03 | 0.06 | 0.3 | 0.2 | N/A | 0.04 |
| Embossing | poor | good | good | good | good | good |
| Grain retention | v good | | | | best | best |
| Thermoformability | good | poor | poor | fair | fair | fair |
| Gloss | low | high | high | low | lowest | lowest |

The test results indicate that replacing NORDEL rubber in whole or in part with polyethylene improves embossing performance (increases embossing depth) but also increases MFI, which in turn increases undesired gloss. In these cases it is desirable to use a low MFI polyethylene and a high level of crosslinking agent ELVALOY AS in order to obtain a sheet with low gloss, good embossing and low MFI. Thermoforming, however, suffers slightly due to the presence of two different polyolefins (polyethylene and polypropylene) with different melting temperatures.

## Claims

1. A thermoplastic polymer composition comprising
(a) 10-35 wt. % of polypropylene homopolymer or a propylene polymer containing not greater than 15 wt. % of higher or lower α-olefins containing up to 8 carbon atoms, or a mixture thereof,
(b) 0-30 wt. % uncrosslinked ethylene propylene copolymer rubber having an ethylene content of 60-80 wt. %,
(c) 10-25 wt. % of an ionomeric copolymer of ethylene and an α,β-unsaturated C₃-C₈ carboxylic acid,
(d) 2-6 wt. % of a copolymer of ethylene and glycidyl acrylate or glycidyl methacrylate,
(e) 5-20 wt. % linear low density polyethylene, and
(f) 0-25 wt. % of an ethylene alpha-olefin copolymer elastomer with α-olefins having 4-8 carbon atoms;
with the proviso that the composition does not contain 0.1-10% by weight of a polypropylene grafted with 0.01-5% by weight of an α,β-unsaturated carboxylic acid or an anhydride thereof.

2. A composition according to claim 1 wherein component (a) is polypropylene.

3. A composition according to claim 1 or 2 wherein component (b) is present in an amount of 10-30 wt. %.

4. A composition according to any one of claims 1-3 wherein component (f) is an ethylene-octene copolymer elastomer.

5. A composition according to any one of claims 1-4 wherein component (f) is present in an amount of 15-25 wt. %.

6. A thermoformed article made from a composition according to any one of claims 1 to 5.

7. A thermoformed article according to claim 6 wherein the article is an instrument panel skin.

8. A thermoformed article according to claims 6 or 7 where the article is laminated to a foam prior to thermoforming.

## Patentansprüche

1. Thermoplastische Polymerzusammensetzung, aufweisend:
(a) 10 bis 35 Gew.% eines Polypropylen-Homopolymers oder eines Propylen-Polymers, das nicht mehr als 15 Gew.% höherer oder niederer α-Olefine mit bis zu 8 Kohlenstoffatomen enthält oder eine Mischung davon,
(b) 0 bis 30 Gew.% nicht vernetztem Ethylen-Propylen-Copolymerkautschuk mit einem Ethylen-Gehalt von 60 bis 80 Gew.%.
(c) 10 bis 25 Gew.% eines ionomeren Copolymers von Ethylen und einer α,β-ungesättigten C₃-C₈-Carbonsäure,
(d) 2 bis 6 Gew.% eines Copolymers von Ethylen und Glycidylacrylat oder Glycidylmethacrylat,
(e) 5 bis 20 Gew.% Polyethylen geringer Dichte mit linearer Struktur und
(f) 0 bis 25 Gew.% eines Ethylen-α-Olefin-Copolymerelastomers mit α-Olefinen, die 4 bis 8 Kohlenstoffatome enthalten;
unter der Voraussetzung, dass die Zusammensetzung nicht 0,1 bis 10 Gew.% eines Polypropylens, gepfropft mit 0,01 bis 5 Gew.% einer α,β-ungesättigten Carbonsäure oder eines Anhydrids davon enthält.

2. Zusammensetzung nach Anspruch 1, worin die Komponente (a) Polypropylen ist.

3. Zusammensetzung nach Anspruch 1 oder 2, worin die Komponente (b) in einer Menge von 10 bis 30 Gew.% vorliegt.

4. Zusammensetzung nach einem der Ansprüche 1 bis 3, worin die Komponente (f) ein Ethylen-Octen-Copolymerelastomer ist.

5. Zusammensetzung nach einem der vorgenannten Ansprüche 1 bis 4, worin die Komponente (f) in einer Menge von 15 bis 25 Gew.% vorliegt.

6. Warmgeformter Artikel, hergestellt aus einer Zusammensetzung nach einem der Ansprüche 1 bis 5.

7. Warmgeformter Artikel nach Anspruch 6, wobei der Artikel eine Außenhaut für eine Instrumententafel ist.

8. Warmgeformter Artikel nach Anspruch 6 oder 7, wobei der Artikel vor dem Warmformen auf Schaumstoff laminiert ist.

## Revendications

1. Composition polymère thermoplastique comprenant
(a) 10 à 35 % en pds d'un homopolymère de polypropylène ou d'un polymère de propylène ne contenant pas plus de 15 % en pds d'a-oléfines supérieures ou inférieures contenant jusqu'à 8 atomes de carbone, ou un mélange de ceux-ci,
(b) 0 à 30 % en pds d'un caoutchouc de copolymère d'éthylène propylène non réticulé ayant une teneur en éthylène de 60 à 80 % en pds,
(c) 10 à 25 % en pds d'un copolymère ionomère d'éthylène et d'un acide carboxylique en C₃-C₈ a,β-insaturé,
(d) 2 à 6 % en pds d'un copolymère d'éthylène et d'acrylate de glycidyle ou de méthacrylate de glycidyle,
(e) 5 à 20 % en pds de polyéthylène linéaire basse densité, et
(f) 0 à 25 % en pds d'un élastomère de copolymère d'éthylène alpha-oléfine avec des a-oléfines ayant 4 à 8 atomes de carbone ;
à condition que la composition ne contienne pas 0,1 à 10 % en poids d'un polypropylène greffé avec 0,01 à 5 % en poids d'un acide carboxylique a,β-insaturé ou d'un anhydride de celui-ci.

2. Composition selon la revendication 1, dans laquelle le composant (a) est le polypropylène.

3. Composition selon la revendication 1 ou 2, dans laquelle le composant (b) est présent en une quantité de 10 à 30 % en pds.

4. Composition selon l'une quelconque des revendications 1 à 3, dans laquelle le composant (f) est un élastomère de copolymère d'éthylène-octène.

5. Composition selon l'une quelconque des revendications 1 à 4, dans laquelle le composant (f) est présent en une quantité de 15 à 25 % en pds.

6. Article thermoformé fabriqué à partir d'une composition selon l'une quelconque des revendications 1 à 5.

7. Article thermoformé selon la revendication 6, dans lequel l'article est un habillage de tableau de bord.

8. Article thermoformé selon les revendications 6 ou 7, dans lequel l'article est laminé sur une mousse avant le thermoformage.
